**Europäisches Patentamt**

**European Patent Office**

**Office européen des brevets**

(19)

(11) Publication number: **0 115 885**
**A1**

(12) # EUROPEAN PATENT APPLICATION

(21) Application number: **84200023.4**

(22) Date of filing: **06.01.84**

(51) Int. Cl.³: **C 08 L 69/00,** C 08 L 55/02
//
(C08L69/00, 55/02),(C08L55/02, 69/00)

(30) Priority: **10.01.83 NL 8300064**

(71) Applicant: **STAMICARBON B.V., Postbus 10, NL-6160 MC Geleen (NL)**

(43) Date of publication of application: **15.08.84 Bulletin 84/33**

(72) Inventor: **Frencken, Eduard Jozef, van Oldenbarneveldstraat 22, NL-6181 BD Elsloo (L.) (NL)**
Inventor: **Hoen, Nicolaas G. M., Hugo de Grootstraat 1, NL-6181 BG Elsloo (L.) (NL)**
Inventor: **Vincent, Joseph A. J. M., Hubertusstraat 73, NL-6191 PB Beek (L.) (NL)**

(84) Designated Contracting States: **AT BE DE FR GB IT NL SE**

(74) Representative: **Hatzmann, Marinus Jan et al, OCTROOIBUREAU DSM P.O.Box 9, NL-6160 MA Geleen (NL)**

(54) **Stabilized polymer composition.**

(57) Stabilized polymer composition comprising
A 10-90 parts by weight polycarbonate,
B 90-10 parts by weight of a mixture of
25-100 parts by weight of a graft copolymer obtained by polymerizing a monomer mixture consisting of styrene, acrylonitrile, methylmethacrylate or a mixture of two or more of these compounds in the presence of a rubber, and
0-75 parts by weight of a copolymer of styrene, acrylonitrile, methylmethacrylate, or a mixture of two or more of these compounds
C 0.04-5.0 parts by weight stabilizer, per 100 parts by weight A and B jointly.
The stabilizer is a mixture of
$C_1$ 0.01-1.0 parts by weight of one or more organic phosphites and/or phosphonites and
$C_2$ 0.01-2.0 parts by weight of at least one compound chosen from the group of
$C_2$ - 1 phenolic antioxidants, and
$C_2$ - 2 thio compounds,
as well as an effective quantity of a fatty acid, fatty acid ester, fatty acid amide, fatty acid salt or a mixture of two or more of these compounds.

1

STABILIZED POLYMER COMPOSITION

The invention relates to a stabilized polymer composition comprising:

A 10-90 parts by weight polycarbonate,

B 90-10 parts by weight of a mixture of

-25-100 parts by weight of a graft copolymer obtained by polymerizing a monomer mixture consisting of styrene, acrylonitrile, methylmethacrylate or a mixture of two or more of these compounds in the presence of a rubber, and

-0-75 parts by weight of a copolymer of styrene, acrylonitrile, methylmethacrylate or a mixture of two or more of these compounds, and

C 0.04-5.0 parts by weight stabilizer, per 100 parts by weight A and B jointly.

From European patent publication 23291 it is known how to stabilize such thermoplastic synthetic mixtures (hereinafter to be referred to as ABS/PC mixtures) with specific phosphite esters.

Though the use of the compounds described in that publication leads to an improved stability of the ABS/PC mixtures, the stability thus obtained is not sufficient for practical uses.

The object of the invention is to provide a polymer composition having an improved stability. The invention is based on the surprising insight that a specific combination of at least three additives is required for achieving this result.

To this end the stabilized polymer composition according to the invention is characterized in that the stabilizer is a mixture of

$C_1$     0.01-1.0 parts by weight of one or more organic phosphites and/or phosphonites and

$C_2$     0.01-2.0 parts by weight of at least one compound chosen from the group of

$C_2$ - 1 phenolic antioxidants, and

$C_2$ - 2 thio compounds,

as well as an effective quantity of a fatty acid, fatty acid ester, fatty acid amide, fatty acid salt or a mixture of two or more of these compounds.

It has been found dat the use of such a combination of compounds in ABS/PC mixtures results in a good colour stability and in a good processing stability while retaining good mechanical properties.

The organic phosphites eligible are the compounds according to formula I of the formula sheet. In this formula substituents $R_1$, $R_2$ and $R_3$ may represent different and/or the same groups.

The phosphites may include:
- trisnonylphenylphosphite
- tridodecylphosphite
- diphenylisooctylphosphite
- bis-(2,4-ditert.butylphenyl)pentaerythritoldiphosphite
- tris-(2,4-di-tert.butylphenyl)phosphite
- distearylpentaerythritoldiphosphite
- tetratridecyl-[1.1-bis-(5-tert.butyl-4-hydroxy-2-methylphenyl)-butane]-diphosphite
- distearyl-mono-(2-hydroxytriacontanol)-sorbitoltrisphosphite
- tetrakis-(2,4-di-tert.-butylphenyl)-4.4'-biphenylene-di-phosphonite
- tris-[2-tert.butyl-4-thio-(2'-methyl-4'-hydroxy-5'-tert.butyl)-phenyl-5-methyl]phenylphosphite.

Preference is given to phosphites according to formula I, where $R_1$, $R_2$ and/or $R_3$ are chosen from the group consisting of
- phenyl
- alkyl, and
- 2,4-ditert.butylphenyl.

Phenolic compounds may be:
- 2,6-di-tert.butyl-4-methylphenol
- styrenated phenol
- 2,6-di-tert.-butyl-4-methoxyphenol
- 2,4,6 tri-tert.butylphenol
- 3,5 di-tert.butyl-4-hydroxybenzylalcohol
- 2,6 di-tert.butyl-4-ethylphenol
- dicyclopentyl-4-methylphenol

- octadecyl-3-(3,5-di-tert.butyl-4-hydroxyphenyl)propionate
- tert.butyl-tert.octyl-4-methylphenol
- 2,2' methylene-bis-(6-tert.butyl-4-methylphenol)
- 2,2' methylene-bis-(6-tert.butyl-4-ethylphenol)
- 2,2' methylene-bis-[4-methyl-6-(1-methyl-cyclohexyl)-phenol]
- 2,2' methylene-bis-[4-methyl-6-(α-methylbenzyl)phenol]
- 4,4' methylene-bis-(2,5-ditert.butylphenol)
- 4,4' methylene-bis-(2-tert.butyl-6-methylphenol)
- 2,6-diphenyl-4-stearoxyphenol
- 1,1-bis-(5-tert.butyl-4-hydroxy-2-methylphenyl)butane
- bis[2-tert.butyl-4-methyl-6-(3-tert.butyl-5-methyl-2-hydroxybenzyl)phenyl]terephthalate
- 1,1,3-tris-(5-tert.butyl-4-hydroxy-2-methylphenyl)butane
- 1,3,5-trimethyl-2,4,6-tris-(3,5-di-tert.butyl-4-hydroxybenzyl)benzene
- bis-[3,5-bis-(4'-hydroxy-3-tert.butylphenyl)butanoic acid]glycolester
- 1,3,5-tris-(3,5-di-tert.butyl-4-hydroxybenzyl)-isocyanurate
- 1,3,5-tris-(4-tert.butyl-2,6-dimethyl-3-hydroxybenzyl)isocyanurate
- 3-(3,5-di-tert.butyl-4-hydroxyphenyl)propionic acid triester with 1,3,5-tris(-2-hydroxyethyl)isocyanurate
- pentaerythrityl-tetrakis-[3-(3,5-di-tert.butyl-4-hydroxyphenyl)-propionate]
- N, N'-hexamethylene bis-(3,5-di-tert.butyl)-4-hydroxyhydrocinnanamide)
- 1,2-di-[3-(3,5-di-tert.butyl-4-hydroxyphenyl)propionyl]hydrazine
- 4-octadecanoyl-aminophenol.

Preference is given to phenols based on (di-tert.-butyl-4-hydroxyphenyl) propionic acid esters or methylenebisphenol, because it is exactly these phenols that are particularly active in the combination according to the invention.

Sulphur compounds suitable for application according to the invention are:

- dilaurylthiodipropionate
- dimyristylthiodipropionate
- distearylthiodipropionate
- distearyldisulphide
- pentaerythritol-tetrakis-(3-laurylthiodipropionate)
- 4,4'-thio-bis-(2-tert.butyl-5-methylphenol)

- α,α'-thio-bis-(2,6-di-tert.butyl-p-cresol)
- 2,4-bis-octylmercapto-6-(4-hydroxy-3,5-di-tert.butylanilino)-s-triazine
- 2,2'-thioethanol-bis-3-(3,5-di-tert.butyl-4-hydroxyphenyl)propionate
- bis-(3,5-di-tert.-butyl-4-hydroxybenzyl)malonic acid, bis-(3-thio-pentadecyl)-ester.

Preference is given to di-alkylthiodipropionates, because these compounds are highly effective in the combination according to the invention. But in particular the lauryl and/or stearyl compound is used.

According to the invention the combination of phosphite compound with phenolic compound and fatty acid or fatty acid compound is used, or of phosphite compound with thio compound and fatty acid or fatty acid compound, or a combination of phosphite compound, thio compound, phenolic compound and fatty acid or fatty acid compound.

The quantities of the various compounds depend on various factors such as the ABS/PC ratio, the processing temperature to be applied, the presence of colourants, and the like.

The content of phosphite compound is preferably between 0.01 and 0.5 % (wt) in respect of the whole composition. The content of phenolic and/or thio compound is preferably between 0.01 and 1.0 % (wt) in respect of the whole composition.

The content of fatty acid or fatty acid compound may vary within fairly wide limits and is preferably between 0.25 and 3.0 % (wt).

Suitable fatty acid esters or salts of fatty acids are alkali and alkali earth metal salts of fatty acids having 8-22 carbon atoms. Particularly calcium stearate, zinc stearate and magnesium stearate can be used to advantage.

More particularly fatty acid esters are used, such as compounds based on a fatty acid having 8-22 carbon atoms and an alkanol having 4-22 carbon atoms. Suitable compounds are, for instance, pentaerythritoltetrastearate, butylstearate, stearylstearate, stearylbehenate, cetylbehenate or mixtures of two or more of these compounds.

Beside being active in connection with the stability, these fatty acid esters also bring about an improvement of the pigment dispersion, so that the impact resistance improves.

Suitable fatty acids are stearic acid and other saturated fatty acids having 16-22 carbon atoms. Ethylenebisstearamide in particular qualifies as fatty acid amide.

The quantity of fatty acid or fatty acid compound may vary within wide limits. Preference is given to 0.5-2.5 % (wt) in respect of the polymer composition.

ABS/PC mixtures are known from various publications, such as United Kingdom patent specifications 991,422 and 1,253,266, from United States patent specifications 3,988,389 and 3,954,905 and from European patent publications 5202, 51336 and 146.

United Kingdom patent specification 991,422 describes mixtures of a polycarbonate and a polymer obtained by the graft polymerization of a vinylaromatic compound and an unsaturated nitrile compound in the presence of polybutadiene.

According to United Kingdom patent specification 1,253,266 the heat resistance, the notch impact strength and the hardness of such mixtures can be improved by mixing therein a copolymer containing at least 50 % (wt) α-methylstyrene.

According to United States patent specification 3,988,389 the strength of the fusion seams of mixtures according to these patent specifications can be improved by using a graft copolymer containing 40 to 80 % (wt) rubber, the average particle size of the graft copolymer being between 0.2 and 5 μm.

United States patent specification 3,954,905 shows that the same object can be reached by starting from a graft copolymer having an average particle size of between 0.05 and 0.19 μm and a rubber content of at least 60 % (wt).

European patent application 51336 describes a polymer composition based on a polycarbonate and a specific graft copolymer.

European patent application 5202 describes a polymer composition consisting of a polycarbonate, an ABS graft copolymer having a rubber content of 5-50 % (wt) and a second ABS graft copolymer having a rubber content of 60-90 % (wt). This composition aims at having an improved low-temperature impact resistance.

In European patent publication 146, mixtures of ABS and a polycarbonate based on phenolphthalein are described.

The polymer composition according to the invention preferably contains 30-80 % (wt), more specifically 40-70 % (wt), polycarbonate, the quantity of graft copolymer and copolymer jointly being 20-70, more specifically 30-60 % (wt).

A suitable mode of realizing the invention is characterized by a polymer composition comprising as component B

I    one or more graft copolymers obtained by polymerizing 40 to 80 parts by weight of a monomer mixture consisting of:

20-40 % (wt) acrylonitril

60-80 % (wt) styrene and

0-20 % (wt) of one or more other monomers

in the presence of 20-60 parts by weight rubber;

II   one or more graft copolymers obtained by polymerizing 75-90 parts by weight of a monomer mixture consisting of:

20-40 % (wt) acrylonitrile

60-80 % (wt) styrene and

0-20 % (wt) of one or more other monomers

in the presence of 10-25 parts by weight rubber, with a difference in rubber content between I and II of at least 5 % (wt), and

III  a copolymer obtained by polymerizing 20-40 parts by weight acrylonitrile and 60-80 parts by weight styrene, the rubber content of the whole polymer composition being between 5 and 30 % (wt) .

In a preferred mode of realization the graft copolymer/polymer weight ratio is between 40:60 and 90:10, more specifically between 40:60 and 80:20.

The ratio between the two copolymers I and II is determined particularly by the desired rubber content in relation to the desired heat resistance and flowability. This ratio is generally between 10:1 and 1:10, more specifically the quantity of graft copolymer having the lower rubber content is 5-30 % (wt) of the total quantity of graft copolymer.

In this connection it is noted that the terms styrene and acrylonitrile are understood also to comprise derivatives of styrene and acrylonitrile, such as α-methylstyrene, halogenated styrene and methacrylonitrile.

In principle all thermoplastic polycarbonates are suitable for the moulding materials of the invention. Polycarbonates are known per se and can be obtained by conversion of dihydroxy or polyhydroxy compounds with phosgene or diesters of carbonic acid.

Particularly suitable dihydroxy compounds are dihydroxydiarylalkanes, including those compounds containing alkyl groups or chlorine or bromine atoms in the o. position in respect of the hydroxyl group.

The following compounds are dihydroxydiarylalkanes that are preferred: 4,4'-dihydroxy 2,2-diphenylpropane (bisphenol A), tetramethylbisphenol A, tetrachlorobisphenol A, tetrabromobisphenol A and bis-(4-hydroxyphenyl) p-di-isopropylbenzene. In addition to the polycarbonates, that can be prepared from dihydroxydiarylalkanes alone, it is possible also to apply branched polycarbonates. For the preparation of polycarbonates of this grade, part of the dihydroxy compound, for instance 0.2-2 moles %, is replaced by a polyhydroxy compound.

Examples of suitable polyhydroxy compounds are 1,4-bis (4',4,2'-dihydroxytriphenylmethyl)benzene, fluoroglucinol, 4,6-dimethyl 2,4,6-tri-(4-hydroxyphenyl) 2-heptane, 4,6-dimethyl 2,4,6-tri(4-hydroxyphenyl)heptane, 1,3,5-tri-(4-hydroxyphenyl)benzene, 1,1,1-tri-(4-hydroxyphenyl)ethane and 2,2-bis-[4,4-(4,4' -dihydroxydiphenyl)cyclohexyl]propane.

Polycarbonates of the said grade are described in, for instance, United States patent specifications 3,028,365; 2,999,835; 3,148,172; 3,271,368; 2,970,137; 2,991,273; 3,271,367; 3,280,078; 3,014,891 and 2,999,846.

In case the polymer composition must have flame-retardant properties, it may be an advantage for the polycarbonate component to consist wholly or partly of halogenated polycarbonate.

The chosen polymer composition is preferably such that its rubber content is between 5 and 30 % (wt), more specifically between 10 and 20 % (wt). Within these limits of the rubber content the resulting polymer composition will combine good impact resistance with good processability.

0115885

This rubber content can be obtained by starting from a graft copolymer having a high rubber content and mixing this graft copolymer with a copolymer and polycarbonate until the desired rubber content has been reached. However, two graft copolymers can be started from also, one having a high rubber content and one having a low rubber content. These two graft copolymers are then mixed with polycarbonate and possibly a copolymer to the desired rubber content.

A third possibility is to start from an ABS having a relatively low rubber content, which, after mixing with polycarbonate, will immediately produce the desired rubber content.

Preference is given to using graft copolymers obtained by polymerizing styrene and acrylonitrile in the presence of a rubber.

Suitable for this purpose are the various polymerization techniques known in the art, such as emulsion, suspension, mass and solution polymerization or combinations thereof, such as mass-suspension, emulsion-mass and emulsion-suspension polymerization.

For the preparation of the copolymer of styrene and acrylonitrile preference is given to the preparation in emulsion, but the other polymerization techniques mentioned above may be used also.

In emulsion polymerization the customary techniques may be applied for both the graft copolymers and the copolymer.

In the polymerization in aqueous emulsion the customary auxiliaries required for this purpose must be used, such as emulsifiers, lye, salts, soaps, initiators such as peroxides, and chain length regulators.

Suitable chain length regulators are organosulphur compounds, such as the widely used mercaptans, as well as the dialkyldixanthogens, diarylsulphides mercaptothiazoles, tetraalkylthiurammono and disulphides, etc., separately or mixed together, as well as hydroxyl compounds, such as terpinolenes. In addition the dimer of $\alpha$-methylstyrene or an $\alpha$-alkene having a relatively long chaing can be used also.

The commercially most widely used chain length regulators are particularly the mercapto compounds, and of these the hydrocarbylmercaptans having 8-20 carbon atoms per molecule are much used at the moment. More specifically preference is given to mercaptans having a tertiary alkyl group.

The quantity of organosulphur compound may vary within wide limits, depending on the mixture chosen, the specific compound, polymerization temperature, emulsifier and other variables relating to the recipe. A good result can be achieved by using 0.01-5 parts by weight (per 100 parts by weight monomer) organosulphur compound, preference being given to 0.05-2 parts. Suitable organosulphur compounds comprise n-octylmercaptan, n-dodecylmercaptan, tertiary dodecylmercaptan, tertiary nonylmercaptan, tertiary hexadecylmercaptan, tertiary octadecylmercaptan, tertiary eicosylmercaptan, secondary octylmercaptan, secondary tridecylmercaptan, cyclododecylmercaptan, cyclododecadienylmercaptan, arylmercaptan, such as 1-naphthalenethiol and the like, bis(tetramethylthiuramdisulphide), 2-mercaptobenzathiazole and the like. Mixtures of these compounds can be used also.

As emulsifier widely different compounds can be used, such as disproportionated rosin soap, fatty acid soap, mixtures of these compounds, arylsulphonates, alkylarylsulphonates and other surface-active compounds and mixtures thereof. Nonionogenic emulsifiers can be used also, such as polyethers and polyols. The quantities of the emulsifiers used depend on the grade, and on the reaction parameters and the concentrations of polymerizable monomer in the emulsion polymerization system.

For the emulsion polymerization process suitable compounds supplying free radicals are organic or inorganic peroxides, hydroperoxides, azo compounds, as well as redox initiator systems. These compounds can be added at the beginning of the polymerization process. It is possible also to add these compounds partly at the beginning, partly in the course of the polymerization process.

Preference is given to chosing alkalipersalts or ammoniumpersalts and/or redox systems as initiators. Special mention must be made of potassiumpersulphates, ammoniumpersulphates and sodiumpersulphates. Examples of suitable redox systems are persalts (for instance perchlorates or persulphates), tertiary butylhydroperoxide, cumenehydroperoxide, diisopropylbenzenehydroperoxide and methylcyclohexylhydroperoxide, combined with reductants based on acids containing sulphur in a low state of valency, such as sodiumformaldehydesulphoxylate, bisulphide, pyrosulphide, or with organic bases, such as triethanolamine, with dextrose, sodiumpyrophosphate and mercaptans or combinations thereof, possibly in combination with metal salts, such as ferrous sulphate. These intiators or initiator systems can be metered in one or more steps or even gradually.

As rubber for the preparation of the graft copolymers all rubbers are suitable in principle.

Preference is given to rubber based on butadiene, such as polybutadiene and butadiene-styrene rubber, butadiene-acrylonitrile and butadiene-acrylate rubber. In order to obtain a polymer composition having a good impact resistance, preference is given to starting from a rubber latex having a weight-average particle size ($d_{50}$, determined with electron microscope) of between 0.05 and 0,70 μm.

This, therefore, means that in such a case the graft copolymer is prepared at least partly in emulsion.

The process according to which this rubber latex is prepared is preferably controlled so that highly crosslinked products are obtained. The gel content should preferably be higher than 70 % (wt) (determined in methylethylketone or toluene). When the butadiene content of the rubber is high, this degree of cross-linking can be obtained by polymerizing to high degrees of conversion or by the use of cross-linking agents, i.e. polyfunctional monomers, such as divinylbenzene or ethyleneglycoldimethacrylate.

If no emulsion polymerization process is applied for the graft copolymerization, rubbers made from solutions thereof in organic solvents can also be used. In that case it is desirable, however, for the graft polymerization reaction to be performed, for instance, in the form of a mass-suspension polymerization reaction.

In those cases in which the rubbers are prepared by emulsion polymerization, the emulsifiers, activators and polymerization auxiliaries used for the preparation of the α-methylstyrene-acrylonitrile copolymers can be used. Before the graft reaction the rubber latex must be degasified in order to suppress undesired reactions initiated by non-converted monomer.

Preference is given to the use of polybutadiene homopolymers or butadiene copolymers having a butadiene content of more than 60 % (wt). If other dienes, for instance isoprene, or the lower alkyl esters of acrylic acid are used as comonomers, the butadiene content of the

11    0115885

rubber can be reduced to 30 % (wt) without any adverse effect in relation to the properties of the polymer composition. In principle it is also possible to prepare the graft polymers from saturated rubbers, for instance from ethylenevinylacetate copolymers having a vinylacetate content lower than 50 % or from ethylene-propylene-diene-terpolymers (these dienes are not conjugated; examples are: 1,4 hexadiene, ethylidene norbornene, dicyclopentadiene), as well as acrylate rubber, chlorinated polyethylene or chloroprene rubber. Mixtures of two or more rubbers can be used also.

If the copolymer or the graft copolymer is prepared in suspension, the usual additives can be used, such as suspension stabilizers, compounds supplying free radicals, chain length regulators and the like.

The various components of the polymer composition can be mixed with each other in a manner known per se. The method may depend on the form in which the various components are available.

If all components are in a solid form, such as powder, beads or granulate, they can be mixed advantageously in a vented or non-vented single or double screw extruder.

The graft copolymers have preferably been obtained by polymerizing styrene and acrylonitrile in the presence of a rubber. It may be an advantage, however, to replace the styrene wholly or partly by $\alpha$-methylstyrene, namely if an increased heat resistance is desired.

If an increased heat resistance is desired, a copolymer of acrylonitrile and $\alpha$-methylstyrene can be added with advantage to the polymer composition also.

It is possible also to combine the replacement of part of the styrene in a graft copolymer by $\alpha$-methylstyrene with the addition of an $\alpha$-methylstyrene-containing copolymer.

The polymer composition according to the invention may contain usual additives, such as colourants, antistatics, flame retardants, etc. One or more other plastics may also be incorporated in the polymer composition.

Examples

I Graft copolymer with 17 % (wt) rubber.

Via emulsion polymerization as described in United Kingdom patent specification 859,080, 66.4 parts by weight styrene and 16.6 parts by weight acyrlonitrile were grafted on 17 parts by weight polybutadiene rubber.

II Graft copolymer with 38 % (wt) rubber.

Via emulsion polymerization as described in United Kingdom patent specification 859,080, 43.4 parts by weight styrene and 18.6 parts by weight acrylonitrile were grafted on 38 parts by weight polybutadiene rubber.

III Copolymer of styrene and acrylonitrile.

By means of suspension polymerization as described, 70 parts by weight styrene and 30 parts by weight acrylonitrile were polymerized.

IV Copolymer of α-methylstyrene and acrylonitrile.

As described in European patent publication 41.101, 70 parts by weight α-methylstyrene and 30 parts by weight acrylonitrile were polymerized in emulsion.

V Polycarbonate.

Lexan 141 of General Electric.

VI Polycarbonate.

According to the interface polymerization process, a polycarbonate based on 4,4'-dihydroxydiphenylpropane 2,2 and phosgene was made.

The following additives were used.

A - glyceroltristearate

B - cetylbehenate/stearylbehenate

C - distearylthiodipropionate

D - 1,1-bis-(5-tert.butyl-4-hydroxy-2-methylphenyl)butane

E - pentaerythrityl-tetrakis-[3-(3,5-di-tert.butyl-4-hydroxyphenyl) propionate]

F - tris-(2,4-di-tert.butylphenyl)phosphite.

On the basis of these starting materials a number of mixtures were made on a vented double-screw extruder. The composition is given in table I.

13

Table 1

| Product in parts (wt) | α | β | γ | δ | ε | ζ |
|---|---|---|---|---|---|---|
| I | – | – | – | 10 | 10 | 10 |
| II | 50 | 44 | 44 | 30 | 27 | 27 |
| III | – | 6 | – | 15 | 13 | 8 |
| IV | – | – | 6 | – | – | – |
| V | 50 | 50 | 50 | – | – | – |
| VI | – | – | – | 45 | 50 | 55 |
| D | 0,2 | 0,2 | 0,2 | – | – | – |
| B | – | – | – | 0,5 | 0,5 | 0,5 |
| C | 0,25 | 0,25 | 0,25 | 0,3 | 0,3 | 0,3 |
| D | 0,25 | 0,25 | 0,25 | – | – | – |
| E | – | – | – | 0,15 | 0,15 | 0,15 |
| F | 0,25 | 0,25 | 0,2 | 0,45 | 0,45 | 0,45 |

Of the above-mentioned products test bars were made by injection moulding. The results are stated in table 2.

Table 2

| Example | α | β | γ | δ | ε | ζ |
|---|---|---|---|---|---|---|
| injection moulding temp °C | 250° | 250° | 250° | 260° | 260° | 260° |
| impact resistance (kJ/mm$^2$) | | | | | | |
| 23 °C | 55,3 | 58,0 | 59,3 | 49 | 54 | 65 |
| –40 °C | 42,5 | 40,7 | 41,6 | – | – | – |
| HDT annealed °C | 112,3 | – | – | – | – | – |
| Vicat annealed °C | 116,7 | – | – | 113 | 113 | 120 |

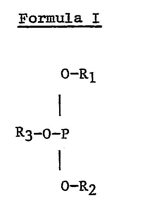

## CLAIMS

1. Stabilized polymer composition comprising

A 10-90 parts by weight polycarbonate,

B 90-10 parts by weight of a mixture of

25-100 parts by weight of a graft copolymer obtained by polymerizing a monomer mixture consisting of styrene, acrylonitrile, methylmethacrylate or a mixture of two or more of these compounds in the presence of a rubber, and

0-75 parts by weight of a copolymer of styrene, acrylonitrile, methylmethacrylate, or a mixture of two or more of these compounds

C 0.04-5.0 parts by weight stabilizer, per 100 parts by weight A and B jointly,

characterized in that the stabilizer is a mixture of

$C_1$ 0.01-1.0 parts by weight of one or more organic phosphites and/or phosphonites and

$C_2$ 0.01-2.0 parts by weight of at least one compound chosen from the group of

$C_2 - 1$ phenolic antioxidants, and

$C_2 - 2$ thio compounds,

as well as an effective quantity of a fatty acid, fatty acid ester, fatty acid amide, fatty acid salt or a mixture of two or more of these compounds.

2. Polymer composition according to claim 1, characterized in that the organic phosphite used is a compound according to formula I of the formula sheet, where $R_1$, $R_2$ and $R_3$ may be the same or different and are chosen from the group consisting of:

- phenyl

- alkyl

- 2,4-di-tert.butylphenyl.

3. Polymer composition according to claim 1 or 2, characterized in that the phenolic compound used is a substituted or non-substituted 4-hydroxyphenylpropionate compound or a methylenebisphenol compound.

4. Polymer composition according to claim 3, characterized in that octadecyl-3-(3,5-di-tert.butyl-4-hydroxyphenyl)priopionate, or penta-erythrityl-tetrakis-[3-(3,5--di-tert.butyl)-4-hydroxyphenyl) propionate] is used.

5. Polymer composition according to any one of claims 1-4, characterized in that the thio compound used is a di-alkylthiodipropionate.

6. Polymer composition according to claim 5, characterized in that dilaurylthiodipropionate or distearylthiodipropionate is used.

7. Polymer composition according to any one of claims 1-6, characterized in that the fatty acid ester used is an ester of an alkanol having 4-22 C atoms with a fatty acid having 8-22 C atoms.

8. Polymer composition as described in substance and elucidated by means of the examples.

9. Object made wholly or partly from a polymer composition according to any one of claims 1-8.

0115885

i/i

<u>Formula I</u>

$$
\begin{array}{c}
\text{O-R}_1 \\
| \\
\text{R}_3\text{-O-P} \\
| \\
\text{O-R}_2
\end{array}
$$

0115885

European Patent Office

**EUROPEAN SEARCH REPORT**

Application number

EP 84 20 0023

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | CH-A- 429 158 (NATIONAL LEAD CO.) * Claims I,II * --- | 1-3,7 9 | C 08 L 69/00 C 08 L 55/02 // (C 08 L 69/00 C 08 L 55/02 C 08 K 5/52 |
| Y | EP-A-0 034 252 (BAYER) * Claim; page 6, lines 20-27; page 7 * --- | 1 | C 08 K 5/53 C 08 K 5/36 C 08 K 5/13 C 08 K 5/00 ) (C 08 L 55/02 |
| Y | CHEMICAL ABSTRACTS, vol. 80, no. 22, 3rd June 1974, page 39, no. 121826j, Columbus, Ohio, USA & JP - A - 73 10629 (KAO SOAP CO., LTD.) 05-04-1973 * Abstract * --- | 1-3,7 9 | C 08 L 69/00 C 08 K 5/52 C 08 K 5/53 C 08 K 5/36 C 08 K 5/13 C 08 K 5/00 ) |
| Y | DE-A-2 022 307 (A.C.C.) * Claims 1-6 * --- | 1-3,5 9 | |
| | | | **TECHNICAL FIELDS SEARCHED (Int. Cl. 3)** |
| A | NL-A-7 404 190 (GENERAL ELECTRIC) * Claims 1-11 * --- | 1-4 | C 08 L C 08 K |
| A | NL-A-7 300 033 (GENERAL ELECTRIC) * Claims 1-14 * ----- | 1,2,7 9 | |

The present search report has been drawn up for all claims

| Place of search THE HAGUE | Date of completion of the search 16-04-1984 | Examiner DECOCKER L. |
|---|---|---|

EPO Form 1503. 03.82